# EUROPÄISCHE PATENTSCHRIFT

(11) **EP 3 580 174 B1**
(45) Veröffentlichungstag und Bekanntmachung des Hinweises auf die Patenterteilung: **06.01.2021**
(21) Anmeldenummer: 17800700.1
(22) Anmeldetag: 21.09.2017
(51) Int. Cl.: C02F 1/00, C02F 1/28, B01D 17/02, B01D 17/00, B01D 39/04, B01D 24/04, B01J 20/24, C02F 101/32, C02F 103/34, C02F 103/00, C02F 103/08, C02F 103/36, B01D 17/04, E03F 5/04, B01J 20/28

(54) **VORRICHTUNG ZUM REINIGEN VON EINER MIT ÖL VERUNREINIGTEN FLÜSSIGKEIT**
DEVICE FOR CLEANING A FLUID CONTAMINATED WITH OIL
DISPOSITIF DE LAVAGE D'UN LIQUIDE CONTAMINÉ PAR DE L'HUILE

(30) Priorität: 09.02.2017 DE 102017001223; 01.06.2017 DE 102017005217
(43) Veröffentlichungstag der Anmeldung: 18.12.2019
(73) Patentinhaber: Zachert, Wolfgang, 50767 Köln (DE)
(72) Erfinder: Zachert, Wolfgang, 50767 Köln (DE)
(74) Vertreter: dompatent von Kreisler Selting Werner - Partnerschaft von Patent- und Rechtsanwälten mbB
(86) Internationale Anmeldenummer: PCT/EP2017/001126
(87) Internationale Veröffentlichungsnummer: WO 2018/145722

(56) Entgegenhaltungen:
- DE-A1- 2 918 805
- DE-A1- 19 549 194
- FR-A1- 2 425 878
- US-A- 4 512 890
- US-A1- 2012 074 067
- US-A1- 2014 284 280

## Beschreibung

Die Erfindung betrifft eine Vorrichtung zum Reinigen von einer mit Öl verunreinigten Flüssigkeit nach Oberbegriff des Hauptanspruchs.

Eine derartige Vorrichtung ist beispielsweise aus der DE 86 32 189 U1 bekannt.

Die dort offenbarte Vorrichtung umfasst einen Behälter, welcher einen Zu- und einen Ablauf für die Flüssigkeit aufweist. Zwischen dem Zu- und Ablauf befindet sich eine Füllung aus das Öl absorbierenden Fäden. Die Füllung wird im Gebrauchszustand von der Flüssigkeit durchströmt.

Die DE 199 54 643 A1 beschreibt die Herstellung und Anwendung eines schwimmfähigen Ölbindemittels aus faserbildenden Proteinen und Mikroorganismen.

Die DE 102 15 411 A1 beschreibt ein Verfahren und eine Vorrichtung zur Separation und Reinigung von Kondensat. Hier wird eine Aktivkohlestufe zum Separieren von Öl verwendet, wobei in der Aktivkohlestufe eine Probeentnahme des Abwassers erfolgt, dessen Trübung durch Vergleich mit einem Referenzwert festgestellt wird.

DE 195 49 194 A1 offenbart einen Schadstofffilter zur Reinigung von Wasserflächen begrenzter Gewässer. Insbesondere Öle sollen mit Hilfe von Mikrofaserbändchen, die eine Art Watte bilden, entfernt werden.

Ein Patronenfilter zur Reinigung von Flüssigkeiten und Gasen von mechanischen Beimengungen ist in DE 29 18 805 A offenbart. Filterpatrone, in denen die Verunreinigungen aufgenommen werden, können ausgewechselt werden.

FR 2 425 878 A1 offenbart eine Vorrichtung zum Reinigen von einer mit Öl verunreinigten Flüssigkeit mit einem Behälter, welcher einen Zulauf für die verunreinigte Flüssigkeit aufweist und einen Ablauf für die gereinigte Flüssigkeit. Im Behälter befindet sich eine Füllung aus einem das Öl absorbierende Material, welches Keratin aufweisen kann.

Die Aufgabe der vorliegenden Erfindung besteht darin, eine Vorrichtung der eingangs genannten Art dahingehend zu verbessern, dass sich zum einen die Absorptionsfähigkeit der Füllung erhöht und zum anderen die Füllung dabei so gestaltet ist, dass sie im Sättigungsfall entsorgungsfähig ist, und sie durch eine bestimmungsgemäß noch ungebrauchte Füllung ersetzt werden kann.

Diese Aufgabe löst die Erfindung mit den Merkmalen der Ansprüche 1 und 9. Vorteilhafte Ausgestaltungen sind in den Ansprüchen 2 bis 8 beschrieben.

Erfindungsgemäß wird die Füllung von einem paketartigen Gewirr aus dreidimensional regellos angeordneten und in allen drei Dimensionen stochastisch verteilten Keratinstrukturen gebildet, welche im Gebrauchszustand der Vorrichtung zwischen dem Zu- und Ablauf von einem geschlossenen Behälterrand umfasst sind und demgegenüber flüssigkeitsdicht anliegen.

Von ganz wesentlicher Bedeutung für die Erfindung ist es, dass die Keratinstrukturen innerhalb eines im Umfang geschlossenen Behälters angeordnet sind, über dessen Umwandungen ein Zulauf der verunreinigten Flüssigkeit erfolgen kann.

Der Zulauf kann über eine perforierte Wandung, über ein Zulaufrohr, über schwerkraftbedingtes Eindringen der verunreinigten Flüssigkeit oder vergleichbare Verfahren erfolgen.

Der Ablauf der gereinigten Flüssigkeit kann ebenfalls über ein Rohr, über eine durchlässige Wandung, oder auch schwerkraftbedingten Abfluss erfolgen.

Da sich diese Ausführungsform der Erfindung insbesondere die Tatsache zu Nutze machen kann, dass Öl auf der Wasseroberfläche schwimmt, kann es durchaus genügen, die erfindungsgemäße Füllung in flüssigkeitsdurchlässigen Strukturen, wie Textilien, perforierten Behältern etc. anzuordnen, weil das mit Öl verschmutzte Wasser dann unter Zurücklassung des Öls innerhalb der Füllung, die sich innerhalb des Behälters befindet, allein schwerkraftbedingt reinigen wird.

Derartige Konstruktionen können auch ohne weiters auf dem Wasserspiegel schwimmen, so dass sich die Durchdringung der Keratinstrukturen mit dem Öl ohne weiteres von selbst ergibt.

Keratinstrukturen, wie sie beispielsweise von natürlichen Faserproteinen von Tier- oder Menschenhaaren gebildet werden, haben durch ihre Struktur eine hohe Ölbindefähigkeit, die sich dadurch erklären lässt, dass solche Strukturen zum einen einen äußeren, schuppenartigen Aufbau aufweisen und zum anderen einen inneren Kern aus einer hohen Anzahl von mikroskopisch kleinsten Faserbündeln (Mikrofibrillen) aufweisen, wodurch sich innerhalb solcher Keratinstrukturen, zahlreiche mikroskopisch kleine Zwischenräume ausbilden, in denen das Öl mittels Kapillarwirkung einzudringen vermag und dort gehalten wird.

Die Erfindung hat erkannt, dass die Kapillarwirkung solcher Keratinstrukturen gefördert wird, wenn sie innerhalb eines paketartigen Gewirrs miteinander eng verschlungen zu einem Konglomerat zusammengefügt sind. Durch die erfindungsgemäß dreidimensional regellose Anordnung und die in allen drei Dimensionen stochastische Verteilung der Keratinstrukturen untereinander wird ein solches Gewirr, bzw. Konglomerat gebildet. Gleichzeitig wird hierdurch aber auch der Zusammenhalt der Keratinstrukturen untereinander sichergestellt, so dass sie praktisch in einem Paket vorliegen, paketweise in den Behälter eingesetzt und nach ihrem bestimmungsgemäßen Gebrauch auch leicht paketweise wieder aus dem Behälter entfernt werden können, um dort paketweise frische, mit Öl ungesättigte Keratinstrukturen einzusetzen, Auch ein behälterweiser Austausch ist möglich mit anschließender Aufarbeitung der Austauschbehälter zur Wiederverwendung.

Man kann auch davon ausgehen, dass die verwendeten Keratinstrukturen, insbesondere Haare, sich vollsaugen und so im Durchmesser wachsen, dass die freien Querschnitte in dem paketartigen Gewirr kleiner werden, so dass die Filtrationszeit mit wachsendem Durchlauf ansteigt.

Die Füllung wird von einem einzigen Paket gebildet, so dass die Füllung als separate Absorptionseinheit vorliegt, die in einem vorbestimmten Aufnahmeraum des Behälters einsetzbar ist. Mit dieser Maßnahme lässt sich die erfindungsgemäße Vorrichtung beispielsweise leicht für einen automatischen Austausch der jeweiligen Füllungen aufwandsarm konstruieren, da in dem Fall jeweils immer nur eine Absorptionseinheit für einen Austausch mit einer nachfolgenden Absorptionseinheit berücksichtigt werden muss. Es ergibt sich hierdurch der Vorteil, dass zumindest ein quasi kontinuierlicher Reinigungsprozess bei einer kontinuierlich der Vorrichtung zuführbaren und erfindungsgemäß zu reinigenden Flüssigkeit sichergestellt wird.

Eine erfindungsgemäße Vorrichtung ermöglicht, dass eine im Aufnahmeraum befindliche jeweils erste Absorptionseinheit aus dem Aufnahmeraum des Behälters mittels einer dem Behälter zugeordneten Wechselvorrichtung automatisch mit einer jeweils zweiten Absorptionseinheit ausgetauscht wird, sobald die erste Absorptionseinheit einen vorbestimmten Sättigungsgrad an Öl aufweist. Der Sättigungsgrad der Absorptionseinheit wird mittels einer optischen, am Behälter oder am Ablauf angebrachten Erkennungsvorrichtung automatisch festgestellt werden. Die Erkennungsvorrichtung ist mit einer SPS-Steuerung verbunden, die über eine Verbindung mit der Wechselvorrichtung diese für den automatischen Austausch der Absorptionseinheiten ansteuert und gegebenenfalls den kontinuierlichen Zufluss bzw. Abfluss der Flüssigkeit durch Ansteuern eines jeweiligen Ventils im Zu- bzw. Ablauf im Zeitraum des Austausches unterbricht. Die jeweils erste Absorptionseinheit wird nach erfolgtem Austausch über eine Transportvorrichtung automatisch einer Sammelstelle zugeführt.

Jede der Sammelstelle zugeführte Absorptionseinheit setzt sich vorteilhafter Weise aus im Wesentlichen mit Öl gefüllten bzw. getränkten Keratinstrukturen zusammen, welche nach ihrem bestimmungsgemäßen Gebrauch beispielsweise zu Briketts oder Pellets aufbereitet werden können, um Briketts bzw. Pellets zu Zwecken der Energieerzeugung zu erzeugen bzw. aufzubereiten. Bei der Aufbereitung können die mit Öl gesättigten Keratinstrukturen zunächst ausgepresst bzw. geschleudert werden, um einen im Hinblick auf den Herstellungsvorgang zu den Briketts bzw. Pellets ggf. anfallenden überschüssigen Teil des in den Keratinstrukturen verbleibenden Öls kann dann zusammen mit den Keratinstrukturen zu den Briketts bzw. Pellets aufbereitet werden, wobei es denkbar ist, dass im Zuge der Aufbereitung Bindemittel zum Einsatz kommen.

Die Wechselvorrichtung kann beispielsweise von einem revolverartigen System mit zumindest zwei Trommeln gebildet werden, die mit ihrer jeweiligen Längsachse um eine gemeinsame Drehachse rotieren. Die Trommeln können eine zylindrische Rohrform mit einem dem Zulauf zugeordneten Öffnungsende und einem dem Ablauf zugeordneten Öffnungsende aufweisen, wodurch bei einem Eintrieb der jeweils zweiten Absorptionseinheit in der Rohrform durch das dem Zulauf zugeordneten Öffnungsende die erste Absorptionseinheit durch die zweite Absorptionseinheit aus dem Ablauf zugeordneten Öffnungsende austreibbar ist. Unterstützt wird das Ein- und Austreiben, indem die Keratinstrukturen der Füllung, bzw. der Absorptionseinheit vom Behälterrand, welcher hier von der Trommelwandung gestellt wird, umfasst sind und demgegenüber flüssigkeitsdicht anliegen. Die flüssigkeitsdichte Anlage stellt auch sicher, dass absorbiertes Öl nicht aus dem Behälter austritt, bzw. nicht aus der Reinigungsvorrichtung vorbei seitlich zwischen dem Zu- und Ablauf austreten kann. Der Austrieb kann noch weiter erleichtert werden, indem der Behälterrand bzw. hier die Trommelwandung vorzugsweise glatt und ohne Hinterschnitte ausgeführt ist.

Ein solches revolverartiges System hat den Vorteil, dass eine erste Trommel zwischen Zu- und Ablauf durch Rotation um die Drehachse auf einer Kreisbahn herausbewegt werden kann und zeitgleich eine nachfolgende Trommel, gefüllt mit einer ungebrauchten Absorptionseinheit, zwischen dem Zu- und Ablauf auf dieser Kreisbahn unmittelbar nachrückt, so dass ein kontinuierlicher Zufluss der Flüssigkeit und ein kontinuierlicher Ablauf der gereinigten Flüssigkeit nahezu ohne Zeitverlust sichergestellt wird. Die jeweils herausbewegte Trommel wird einer Ladestation, umfassend im Wesentlichen ein Transportband zur automatischen Zuführung von ungebrauchten Absorptionseinheiten und einem Ladestempel, zugeführt, um sie wiederum mit einer ungebrauchten Absorptionseinheit zu füllen.

Die Absorptionseinheit wird vorzugsweise gebildet, indem die Keratinstrukturen in einer Ballenform vorliegen, welche eine komplementär zur Innenform des Aufnahmeraums ausgeführte Außenform aufweisen. Durch die Ballenform kann die Absorptionseinheit wie ein Pulverpaket bei einer Kanone leicht in die Trommel über einen oben aufgeführten Stempel eingetrieben werden.

Zur Bildung der Ballenform der Keratinstrukturen schlägt die Erfindung vor, dass ein Netz mit einer Maschenweite verwendet wird, welche kleiner ist, als eine vorbestimmte Mindestlänge für die Keratinstrukturen, Das Netz dient zur Umhüllung der Keratinstrukturen, um sie in die Ballenform zusammenzuschnüren. Die Begrenzung der Maschenweite stellt dabei sicher, dass die Keratinstrukturen auch am Randbereich der Ballenform innerhalb des Netzes gehalten werden.

Um die Absorptionsfähigkeit der erfindungsgemäßen Füllung weiter zu fördern, ist erfindungsgemäß, dass entlang des Weges der Flüssigkeit zwischen dem Zu- und Ablauf das Gewirr der Keratinstrukturen im Wesentlichen gleichmäßig verdichtet, wobei die Verdichtung so groß ist, dass die Keratinstrukturen zumindest ein 6,5 faches ihres Eigengewichtes an Öl aus der Flüssigkeit aufnehmen, bevor eine Sättigung der Keratinstrukturen mit Öl auftritt. Vorzugsweise werden für die Keratinstrukturen natürliche Faserproteine, beispielsweise Wolle von mediterranen Schafrassen, vorgesehen. Hier hat die Erfindung gefunden, dass es mit einem derartigen Material möglich ist, mit entsprechender Verdichtung der Keratinstukturen sogar zumindest ein 12 faches des Eigengewichtes der Keratinstrukturen an Öl aus der Flüssigkeit aufzunehmen, bevor eine Sättigung der Keratinstrukturen mit Öl auftritt.

Weiterhin hat die Erfindung gefunden, dass sich die Absorptionsfähigkeit der Füllung positiv beeinflussen lässt, wenn mehrere unterschiedlichen keratinhaltige Materialien miteinander vermischt werden, um die Füllung zu bilden. Beispielsweise können Federn bzw. Daunen unterschiedlicher Vogelarten und/oder tierisches Haar unterschiedlicher Tierarten Grundstoffe für die Füllung bilden, aus welchen jeweils eine Füllung aus Keratinstrukturen zusammengestellt werden kann. So können beispielsweise ggf. aufbereitete Gänsefedern mit Schafwolle vermengt die Füllung bilden. Dabei können die Federn derart aufbereitet sein, dass sie zum Zwecke der Füllungsbildung vom Federschaft befreit sind.

Außerdem ist es denkbar, dass sich zumindest ein Grundstoff für die Füllung aus keratinhaltigen Naturstoffen wie z.B. Leder und/oder Haut mit keratinhaltigen Hornschichtbestandteilen zusammensetzt. Ferner ist es denkbar, dass solche keratinhaltigen Naturstoffe, wie z.B. Leder, Haut mit Hornschichtbestandteilen aber auch Felle, Pelze oder auch Finger- und Zehennägel, Krallen, Hufe, Hörner, Stacheln, Barten von Walen, Schnäbel, Hornschuppen etc. verwendet werden können, um beispielsweise aus ihnen mittels chemischer Behandlung proteinogene Aminosäuren zur Bildung eines Grundstoffes für die erfindungsgemäße Füllung zu gewinnen. Hierzu kann es durchaus von Vorteil sein, diese keratinhaltigen Naturstoffe aufgrund ihrer Wasserunlöslichkeit zunächst mit einer Säure, z.B. Salzsäure, zu hydrolysieren und das Hydrolysat beispielsweise mittels Ammoniak zu neutralisieren, um Aminosäuren zur Bildung eines Grundstoffes für die Füllung zu erhalten.

Ohne das Sachgebiet der erfindungsgemäßen Vorrichtung verlassen zu wollen, soll an dieser Stelle erwähnt sein, dass sich ein oder mehrere obig beschriebene Grundstoffe zu einer erfindungsgemäßen Füllung zusammengestellt, durchaus auch dazu eignen könnten, um eine so gebildete erfindungsgemäße Füllung beispielsweise auch als Filter und/oder Dämmmaterial einzusetzen. Beispielsweise als Feinstaubfilter für Autos, insbesondere Autos mit Dieselantrieb, Schornsteine, Kamine bzw. als Schall- oder Wärmedämmung.

Je nachdem wie die Materialzusammensetzung unterschiedlicher Keratinstrukturen ausfällt, kann bei entsprechender Verdichtung der Keratinstrukturen sogar zumindest ein 16faches bis zumindest ein 28faches des Eigengewichtes der Keratinstruktur an Öl aus der Flüssigkeit aufgenommen werden, bevor eine Sättigung der Keratinstrukturen mit Öl auftritt. Aus Versuchen ergab es sich, dass ein obiger Wertebereich für die Absorptionsfähigkeit insbesondere bei einer Verwendung von Gänsefedern erreichbar ist.

Diese Angaben erfolgen unter der Voraussetzung, dass die Keratinstrukturen in ihren natürlichen Längen und Durchmessern vorhanden sind.

Es kann aber durchaus auch Sinn machen, die Keratinstrukturen auf eine mehr oder weniger einheitliche Länge zu zerschneiden/häckseln so dass die Packungsdichte der zerkleinerten Keratinstrukturen erheblich größer wird. Hieraus kann ohne weiters gefolgert werden, dass die Aufnahmefähigkeit dieser zerkleinerten Keratinstrukturen auch ohne weiteres oberhalb des 28faches ihres Eigengewichts liegen kann, bevor sie mit Öl gesättigt sind.

Ggf. lässt sich auch durch Versuche die optimale Länge dieser Keratinstrukturen herausfinden, in dem man die Aufnahmefähigkeit jeweiliger Pakete an Keratinstrukturen abhängig von der jeweiligen Länge der Keratinstrukturen feststellt und ggf. mathematisch auch das Maximum durch Differenzierung bestimmt.

Die erfindungsgemäße Vorrichtung kann stationär oder mobil zum Einsatz kommen.

In stationärer Weise kann die Vorrichtung beispielsweise zur Öltrennung in Werkstätten betrieben werden, um z.B. Wasser und/oder Gefrierschutzmittel wie z.B. Glykol von Ölverunreinigungen zu trennen. Auch hier ist denkbar, dass die Vorrichtung zum Beispiel zur Reinigung von mit Öl verunreinigtem Glycerin verwendet wird.

Ein Ausführungsbeispiel der Erfindung hierzu kann darin bestehen, die Vorrichtung in Kanalanlagen von Tankstellen, Werkstätten und/oder Straßen oder dergl. einzubauen. Beispielsweise könnte ein einem Kanaldeckel zugeordneter Auffangkorb als erfindungsgemäße Vorrichtung umfunktioniert werden. Ein solcher Korb könnte als Behälter der Vorrichtung gestaltet sein, in dem er für den Zulauf eine oberseitige Öffnung aufweist, welche von der Oberseite eines geschlossenen Korbrandes bzw. Behälterrandes gebildet werden kann, an welchem die Keratinstrukturen flüssigkeitsdicht anliegen, und einen als Ablauf siebartig ausgeführten Boden aufweist, an welchem die Unterseite des Korbrandes bzw. Behälterrandes angeschlossen ist.

In mobiler Weise kann die Vorrichtung z.B. auf einem hochseetüchtigen Schiff zum Einsatz kommen. Dabei kann die Vorrichtung im Schiff installiert sein, um insbesondere bei Ölkatastrophen vor Ort von Öl verschmutztes Meerwasser in einem kontinuierlichen Prozess aufzusaugen, erfindungsgemäß in ein oder mehrstufiger Weise zu reinigen und das gereinigte Wasser wieder dem Meer zuzuführen. Unter einer mehrstufigen Reinigung versteht die Erfindung einen mehrmaligen Durchlauf der zugeführten Flüssigkeit durch ein und dieselbe Vorrichtung oder einen Durchlauf der Flüssigkeit durch mehrere nach Art einer Kaskade hintereinander geschaltete erfindungsgemäße Vorrichtungen.

Weiterhin ist es aber auch möglich, dass die Vorrichtung mobil gestaltet ist, indem sie von einem Schiff durch ein auf dem Meer aufschwimmendes Ölfeld mit ihrem jeweiligen Zulauf voran durch das Ölfeld durchführbar ist. In dem Fall kann der Behälter der Vorrichtung in besonders einfacher Weise von einem oben aufgeführten Netz gebildet werden, welches eine den Zulauf zugeordnete Vorderseite und eine dem Ablauf zugeordnete Rückseite aufweist, wobei zwischen den Seiten die Füllung sandwichartig eingebettet sein kann und wobei die Vorder- und Rückseite an ihren jeweiligen Randbereichen miteinander über einen geschlossenen Netzrand, welcher hier den Behälterrand stellt, verbunden sind, um insbesondere in Querrichtung der Seiten ein Austreten der Füllung zu vermeiden. Da die Füllung erfindungsgemäß in einem Konglomerat vorliegt, ist es möglich, dass die Vorderseite zur Befüllung des Netzes mit der Füllung eine Öffnung aufweist, die beim bestimmungsgemäßen Gebrauch geöffnet bleiben kann, da der Zusammenhalt der Keratinstrukturen aufgrund ihrer dreidimensional regellosen Verteilung untereinander sichergestellt ist. Weiterhin stellt der erfindungsgemäße Zusammenhalt der Keratinstrukturen im Konglomerat sicher, dass sie nach ihrem bestimmungsgemäßen Gebrauch paketweise und unmittelbar entsorgungsfähig aus dem Netz entfernt werden können. Der Netzrand, bzw. Behälterrand kann schmalbandig ausgeführt sein und kann dennoch zur Befestigung von Schleppseilen verwendet werden. Im Besonderen eignet sich der geschlossene Netzrand, bzw. Behälterrand zur Befestigung von Schwimmkörpern oder kann ggf. auch selbst als Schwimmkörper ausgeführt sein.

Im Folgenden wird die Erfindung anhand von Ausführungsbeispielen näher erläutert.

Es zeigen:
Fig. 1 eine funktionelle Darstellung der erfindungsgemäßen Vorrichtung;
Fig. 2 die erfindungsgemäße Vorrichtung in einem beispielhaften, mobilen Einsatzfall;
Fig. 3a eine Vorrichtung, die nicht der vorliegenden Erfindung entspricht;
Fig. 3b das Anwendungsbeispiel gem. Fig. 3a in einer Schnittdarstellung;
Fig. 3c ein weiteres Anwendungsbeispiel einer Vorrichtung, die nicht der vorliegenden Erfindung entspricht.

Sofern im Folgenden nichts anderes gesagt ist, gilt die folgende Beschreibung stets für alle Figuren.

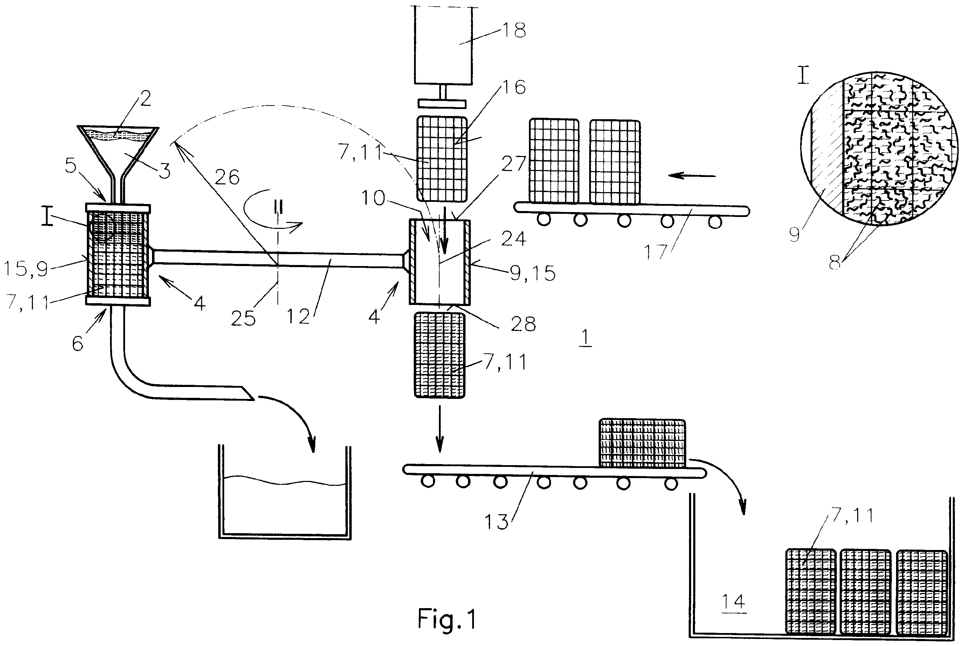

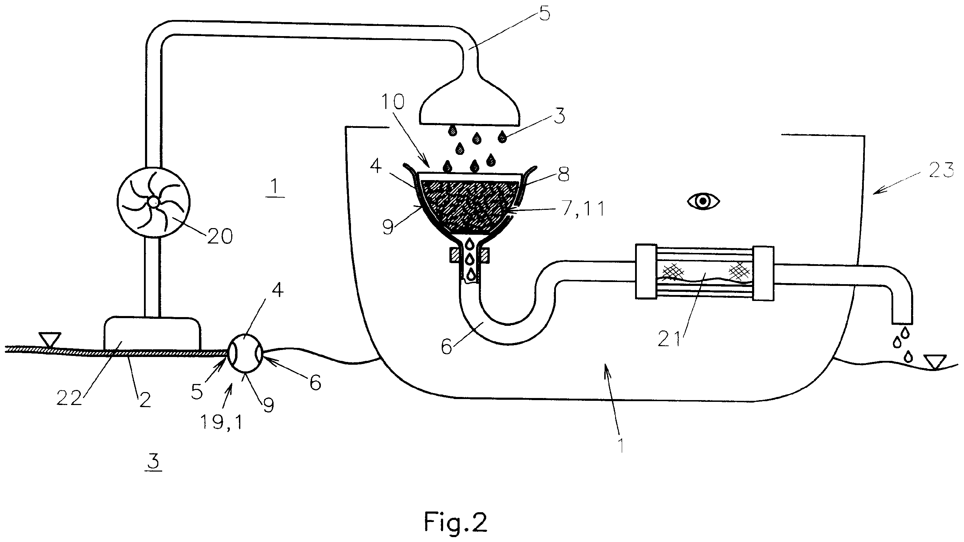

Die Figuren 1 und 2 zeigen jeweils Ausführungsbeispiele für eine erfindungsgemäße Vorrichtung (1) zum Reinigen von einer mit Öl (2) verunreinigten Flüssigkeit (3).

Hierbei zeigt Fig. 1 eine erfindungsgemäße Vorrichtung (1) in einer schematischen Darstellung, in welcher der erfindungsgemäße Reinigungsprozess in einer beispielhaften, automatischen Ausführungsvariante gezeigt wird.

Insbesondere Fig. 2 zeigt einen konkreten Anwendungsfall der Erfindung, wobei hier die Vorrichtung (1) in einem mobilen Einsatzfall gezeigt ist. Hier ist die Vorrichtung (1) in einem hochseetüchtigen Schiff (23) installiert, mit welchem auf Meerwasser schwimmendes Öl (2), welches hier von einer Barriere (19) umschlossen ist, zusammen mit dem Meerwasser abgesaugt wird und mittels der Vorrichtung (1) als vom Öl (2) gereinigtes Abwasser wieder dem Meer zugeführt wird. Für eine vereinfachte Darstellung ist die Vorrichtung (1) hier lediglich in ihrem Grundprinzip als nicht automatisch dargestellt, wobei vorzugsweise eine nach Fig. 1 ausgeführte automatische Vorrichtung (1) innerhalb des Schiffes (23) zum Einsatz kommt, bei welcher es auch möglich ist, die der Vorrichtung (1) zugeführte Flüssigkeit (3) mehrstufig zu reinigen, bevor sie hier dem Meerwasser wieder zugeführt wird.

Die Fig. 1 und 2 und 3b zeigen, dass die erfindungsgemäße Vorrichtung (1) einen Behälter (4) umfasst, welcher einen Zu- und einen Ablauf (5, 6) für die jeweilige Flüssigkeit (3) aufweist. Zwischen dem Zu- und Ablauf (5, 6) ist im Behälter (4) eine Füllung (7) aus einem das Öl (2) absorbierenden Material angeordnet, welches im bestimmungsgemäßen Gebrauchszustand der Vorrichtung (1) von der mit Öl (2) verunreinigten Flüssigkeit (3) durchströmbar ist.

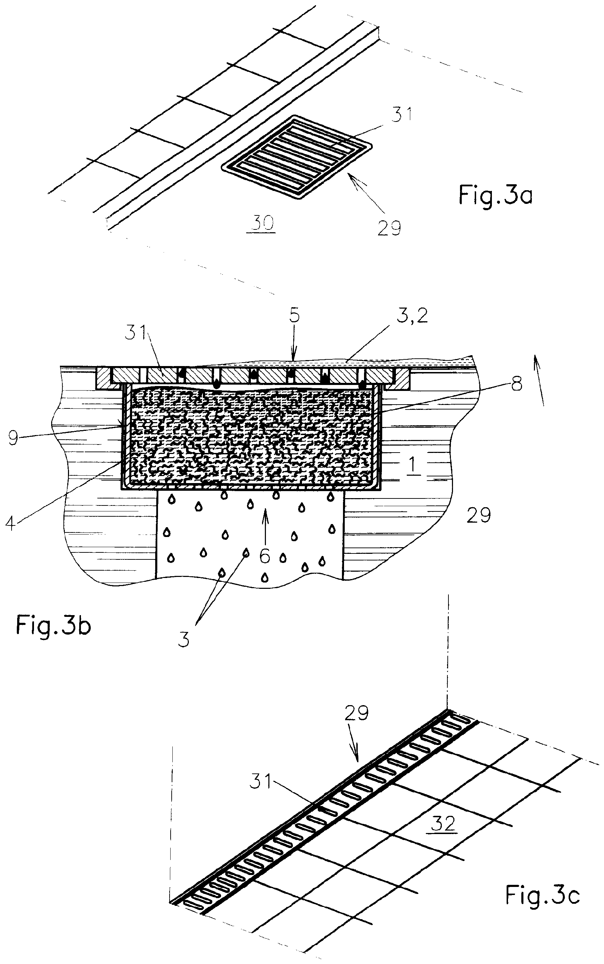

Erfindungsgemäß wird die Absorptionseigenschaft und Handhabung der Füllung (7) bezüglich ihrer Platzierung innerhalb des Behälters (4) erhöht, indem die Füllung (7) von einem paketartigen Gewirr aus dreidimensional regellos angeordneten und in allen drei Dimensionen stochastisch verteilten Keratinstrukturen (8) gebildet wird. Die regellose Verteilung der Keratinstrukturen (8) wird insbesondere in der Detailansicht I in Fig. 1 und in Fig. 3b dargestellt.

Weiterhin zeigen insbesondere Fig. 1 und Fig. 3b, dass die Keratinstrukturen (8) im Gebrauchszustand der Vorrichtung (1) zwischen dem Zu- und Ablauf (5, 6) von einem geschlossenen Behälterrand (9) umfasst und demgegenüber flüssigkeitsdicht anliegen.

Die Füllung (7) wird von einer separaten, in einem vorbestimmten Aufnahmeraum (10) des Behälters (4) einsetzbaren Absorptionseinheit (11) gebildet.

In dem in Fig. 2 gezeigten Ausführungsbeispiel ist die Absorptionseinheit (11) von oben in einem trichterförmigen Behälter (4) einlegbar und weist hierfür eine komplementär zur Innenform des Behälters (4) ausgeführte Außenform auf.

Die innerhalb des Schiffes (23) installierte Vorrichtung (1) wirderfindungsgemäß automatisch ausgeführt. Hierzu zeigt Fig. 1, dass eine im Aufnahmeraum (10) befindliche jeweils erste Absorptionseinheit (11) aus dem Aufnahmeraum (10) des Behälters (4) mittels einer dem Behälter (4) zugeordneten Wechselvorrichtung (12) automatisch mit einer jeweils nachrückenden zweiten Absorptionseinheit (11) austauschbar ist.

Die Wechselvorrichtung (12) wird hier von einem revolverartigen System mit zumindest zwei Trommeln (15) gebildet, in welchen jeweils eine Absorptionseinheit (11) einsetzbar ist. Die Trommeln (15) fungieren als Behälter (4) und weisen eine gerade, zylindrische Rohrform auf. Die Trommeln (15) weisen jeweils eine Längsachse (24) auf, mit welcher sie auf einer gemeinsamen Kreisbahn (26) um eine gemeinsamen Drehachse (25) rotieren, wobei hier jeweils die linke Trommel (15) in einem bestimmungsgemäßen Gebrauchszustand zur Säuberung der Flüssigkeit (3) betrieben wird. Hierzu befindet sich die linke Trommel (15) mit ihrer Absorptionseinheit (11) im Eingriff zwischen dem Zu- und Ablauf (5, 6).

Die rechte Trommel (15) befindet sich mit einer dem Zulauf (5) zugeordneten Öffnung (27) unterhalb eines Kolbenzylinders (18). Der Kolbenzylinder (18) dient dazu, die jeweils rechte Trommel (15) von einer mit Öl gesättigten Absorptionseinheit (11) zu befreien und sie mit einer ungebrauchten Absorptionseinheit (11) zu ersetzen. Hierzu werden ungebrauchte Absorptionseinheiten dem Kolbenzylinder (18) mittels einer Transportvorrichtung (17) automatisch zugeführt. Der Kolbenzylinder (18) dient als Ladestation und treibt mit seinem ausgefahrenen Kolben eine ungebrauchte Absorptionseinheit (11) in den Aufnahmeraum (10) der rechten Trommel (15), während die ungebrauchte Absorptionseinheit (11) bei ihrem Eintrieb die unterhalb der rechten Trommel (15) dargestellte, mit Öl gesättigte Absorptionseinheit (11) durch eine dem Ablauf (6) zugeordneten Trommelöffnung (28) austreibt und einer Transportvorrichtung (13) zuführt, mit welcher die jeweils gebrauchten mit Öl (2) gesättigten Absorptionseinheiten (11) einer Sammelstelle (14) zuführbar sind.

Für ein leichtes Ein- bzw. Austreiben der jeweiligen Absorptionseinheiten (11) werden diese gebildet, indem die Keratinstrukturen (8) in einer Ballenform vorliegen, welche eine komplementär zur Innenform des hier rohrförmigen Aufnahmeraums (10) ausgeführte Außenform aufweisen. Zur Bildung der Ballenform der Keratinstrukturen (8) wird ein Netz (16) verwendet, mit welchem die Keratinstrukturen (8) umwickelt und miteinander verdichtet sind. Das Netz (16) weist eine Maschenweite auf, die kleiner ist als eine vorbestimmte Mindestlänge für die Keratinstrukturen (8).

Sobald die Absorptionseinheit (11) der linken Trommel mit Öl gesättigt ist, wird diese automatisch auf der Kreisbahn (26) in Richtung zum Kolbenzylinder (18) bewegt, während unmittelbar eine auf der Kreisbahn (26) nachrückende Trommel (15) ihren Platz einnimmt. Vorzugsweise werden mehr als zwei Trommeln (15) auf der Kreisbahn (26) vorgesehen, um insbesondere die Betriebssicherheit der Vorrichtung (1) im Hinblick auf einen kontinuierlichen Betrieb zu erhöhen. Es ist denkbar, dass derartige Trommeln (15) hintereinander aufgereiht auf geschlossenen Kurvenbahnen vorbestimmter Bahnlänge bewegt werden, wobei ein oder auch mehrere Trommein (15) innerhalb einer Ladestation gleichzeitig mit Absorptionseinheiten (11) bestückt werden, während ein oder auch mehrere Trommeln (15) innerhalb einer Betriebsstation im bestimmungsgemäßen Betrieb sind.

Derartige komplexe Systeme können ohne weiteres auf großen, hochseetüchtigen Schiffen, wie z.B. Frachtschiffen, für einen mobilen Einsatz auf Gewässern installiert werden, um sie z.B. bei Ölkatastrophen einzusetzen. Wie bereits oben erwähnt, zeigt hierzu insbesondere Fig. 2 einen Fall, bei welchem eine Ansaugglocke (22) Öl (2), welches nach einer Ölkatastrophe auf der Flüssigkeit (3) - hier Meerwasser - schwimmt und von einer Barriere (19) umschlossen ist, mit der Flüssigkeit (3) über eine Pumpe (20) angesaugt wird und dem Zulauf (5) zugeführt wird. Über den Ablauf (6) wird die erfindungsgemäß gereinigte Flüssigkeit (3) wieder abgelassen. Der Ablauf (6) umfasst ein Schauglas (21), durch welches der Zustand der Flüssigkeit (3) optisch kontrolliert werden kann.

Eine Alternative oder Ergänzung für eine komplexe, innerhalb eines Schiffes (23) verbaute Vorrichtung (1) ist denkbar, bei der die Vorrichtung (1) auch Teil einer auf dem Meerwasser schwimmfähigen Barriere (19) ist, welche zumindest einen Aufnahmeraum zur Aufnahme der erfindungsgemäßen Füllung (7) aus Keratinstrukturen (8), einen dem jeweils auf dem Meerwasser schwimmenden Öl (2) zugewandten Zulauf (5), einen dem jeweils auf dem Wasser schwimmenden Öl (2) abgewandten Ablauf (6) und einen zwischen dem Zu- und Ablauf angeordneten umlaufenden Barriererand aufweist, welcher in dem Fall der Behälterrand (9) der so gebildeten Vorrichtung (19 ist und sicherstellt, dass durch die erfindungsgemäß flüssigkeitsdichte Anlage der Keratinstrukturen kein innerhalb der Vorrichtung (1) befindliches Öl (2) zwischen dem Zu- und Ablauf (5), (6) nach außen dringt. Zur Bildung der Barriere (19) kann ein Netz (16), wie es oben beschrieben ist verwendet werden, um mit diesem insbesondere den Behälter (3) der Barriere (19) und damit den Aufnahmeraum für die Füllung (7) zu bilden.

Entlang des Weges der Flüssigkeit (3) zwischen dem jeweiligen Zu- und Ablauf (5), (6) ist das Gewirr der Keratinstrukturen (8) im Wesentlichen gleichmäßig verdichtet, wobei die Verdichtung so groß ist, dass die Keratinstrukturen zumindest ein 6,5 faches ihres Eigengewichtes an Öl (2) aus der Flüssigkeit (3) aufnehmen, bevor eine Sättigung der Keratinstrukturen (8) mit Öl (2) auftritt. Vorzugsweise werden für die Keratinstrukturen (8) natürliche Faserproteine aus Wolle, Haar oder Federn gebildet. Beispielsweise kann Schafswolle von Schafrassen aus mediterranen Ländern und/ oder Gänsefedern zum Einsatz kommen. So kann erreicht werden, dass die Verdichtung der Keratinstrukturen so groß ist, dass sie zumindest ein 12-faches bis sogar ein 28-faches ihres Eigengewichtes an Öl (2) aus der Flüssigkeit (3) aufnehmen, bevor eine Sättigung der Keratinstrukturen (8) mit Öl (2) auftritt.

Die Fig. 3a, b und c zeigen eine Vorrichtung (1), die nicht der vorliegenden Erfindung entspricht und die innerhalb von Kanal- bzw. Abflussanlagen (29) eingebaut sein kann. Hierzu zeigt Fig. 3a in Verbindung mit Fig. 3b, dass die Vorrichtung (1) Bestandteil eines Gullys sein kann, welcher in einer Straße (30) eingelassen ist. Hierzu zeigt Fig. 3b, dass der Gully ein Auffangkorb aufweist, welcher als erfindungsgemäßer Behälter (4) ausgeführt ist. Der Auffangkorb bzw. der Behälter (4) weist einen Behälterrand (9) auf, an welchem die Keratinstrukturen (8) flüssigkeitsdicht anliegen. Der Behälter ist oben offen, und mit einem Deckel (31) abgedeckt, welcher Öffnungen für einen Zulauf (5) von Flüssigkeiten (3) aufweist. Bei geöffnetem Deckel (31) kann der Behälter (4) leicht durch den erfindungsgemäßen Zusammenhalt der Keratinstrukturen von selbigen nach ihrer Sättigung befreit werden, um frische, ungesättigte Keratinstrukturen nachzufüllen. Der Boden des Behälters ist zur Bildung eines Ablaufes (6) für die Flüssigkeit (3) siebartig ausgeführt. In Fig. 3c ist der Boden (32) einer Werkstatt gezeigt, in welchem eine Auffangrinne mit siebartigem Boden eingelassen ist, die als erfindungsgemäße Vorrichtung (1) ausgeführt ist und mit einem siebartigen bzw. gitterrostartigen Deckel (31) abgedeckt ist.

In jedem Fall bietet die Erfindung ein nahezu unbegrenztes Potential an Einsatzmöglichkeiten. Insbesondere lässt sich durch die Anordnung der erfindungsgemäßen Füllung in flüssigkeitsdurchlässigen Beuteln. Säcken oder anderweitigen Textilien ohne weiteres auch auf der Erdoberfläche befindliches Öl, zum Beispiel auf Straßen, im Pipelinebereich, im Raffineriebereich, aufnehmen und umweltfreundlichst entsorgen.

Versuche haben insoweit gezeigt, dass durch die erfindungsgemäßen, auch schwimmenden Aufnahmeeinrichtungen Hafenbereiche sehr effektiv von schwimmenden Ölfilmen befreit werden können oder dass die Aufnahme Öl beinhaltender Stoffe im Fahrzeugbereich hervorragend funktioniert.

Auch Seevögel mit ölverschmiertem Gefieder können gerettet werden, weil die Affinität des Öls im Gefieder zum erfindungsgemäßen Material der Füllung größer ist als zum Gefieder, welches sich auch mit Wasser vollgesaugt hat.

### Bezugszeichenliste

- 1: Vorrichtung
- 2: Öl
- 3: Flüssigkeit
- 4: Behälter
- 5: Zulauf
- 6: Ablauf
- 7: Füllung
- 8: Keratinstrukturen
- 9: Behälterrand
- 10: Aufnahmeraum
- 11: Absorptionseinheit
- 12: Wechselvorrichtung
- 13: Transportvorrichtung
- 14: Sammelstelle
- 15: Trommel
- 16: Netz
- 17: Transportvorrichtung
- 18: Kolbenzylinder
- 19: Barriere
- 20: Pumpe
- 21: Schauglas
- 22: Ansaugglocke
- 23: Schiff
- 24: Längsachse
- 25: Drehachse
- 26: Kreisbahn
- 27: Öffnung (5)
- 28: Öffnung (6)
- 29: Kanalanlage
- 30: Straße
- 31: Deckel
- 32: Boden

## Patentansprüche

1. Vorrichtung (1) zum Reinigen von einer mit Öl (2) verunreinigten Flüssigkeit (3) mit einem Behälter (4), welcher einen Zulauf (5) für die verunreinigte Flüssigkeit (3) aufweist, und einen Ablauf (6) für die gereinigte Flüssigkeit wobei sich im Behälter (4) eine Füllung (7) aus einem das Öl (2) absorbierenden Material befindet, welches im bestimmungsgemäßen Gebrauchszustand der Vorrichtung (1) von der verunreinigten Flüssigkeit (3) unter Hinterlassung der Verunreinigung durchströmbar ist, **dadurch gekennzeichnet,**
• **dass** die Füllung (7) von einem paketartigen Gewirr aus dreidimensional regellos angeordneten und in allen drei Dimensionen stochastisch verteilten Keratinstrukturen (8) gebildet wird, welche im Gebrauchszustand der Vorrichtung (1) zwischen dem Zu- und Ablauf (5,6) von einem geschlossenen Behälterrand (9) umschlossen sind und diesem gegenüber flüssigkeitsdicht anliegen,
• wobei entlang des Weges der Flüssigkeit (3) zwischen dem Zu- und Ablauf (5,6) das Gewirr der Keratinstrukturen (8) im Wesentlichen gleichmäßig verdichtet ist, wobei die Verdichtung so groß ist, dass die Keratinstrukturen (8) zumindest ein 6,5 faches ihres Eigengewichtes an Öl (2) aus der Flüssigkeit (3) aufnehmen, bevor eine Sättigung der Keratinstrukturen (8) mit Öl (2) auftritt,
• wobei die Füllung (7) von einer separaten, in einen vorbestimmten Aufnahmeraum (10) des Behälters (4) einsetzbaren Absorptionseinheit (11) gebildet wird,
• wobei eine im Aufnahmeraum (10) befindliche jeweils erste Absorptionseinheit (11) aus dem Aufnahmeraum (10) des Behälters (4) mittels einer dem Behälter (4) zugeordnete Wechselvorrichtung (12) automatisch mit einer jeweils zweiten Absorptionseinheit (11) austauschbar ist,
• wobei der Austausch ausgeführt wird, sobald die erste Absorptionseinheit (11) einen vorbestimmten Sättigungsgrad an Öl aufweist, wobei der Sättigungsgrad der Absorptionseinheit (11) mittels einer optischen, am Behälter (4) oder am Ablauf (6) angebrachten Erkennungsvorrichtung automatisch feststellbar ist,
• wobei die Erkennungsvorrichtung mit einer SPS-Steuerung verbunden ist, die über eine Verbindung mit der Wechselvorrichtung (12) diese für den automatischen Austausch der Absorptionseinheiten (11) ansteuert und den kontinuierlichen Zufluss und Abfluss der Flüssigkeit (3) durch Ansteuern eines jeweiligen Ventils im Zu- bzw. Ablauf (5, 6) im Zeitraum des Austausches unterbricht,
• wobei die jeweils erste Absorptionseinheit (11) nach erfolgtem Austausch über eine Transportvorrichtung (13) automatisch einer Sammelstelle (14) zuführbar ist.

2. Vorrichtung (1) nach Anspruch 1, **dadurch gekennzeichnet, dass** die Wechselvorrichtung (12) von einem revolverartigen System mit zumindest zwei Trommeln (15) gebildet wird, in welchen jeweils eine Absorptionseinheit (11) einsetzbar ist.

3. Vorrichtung (1) nach Anspruch 1 oder 2, **dadurch gekennzeichnet, dass** die Absorptionseinheit (11) gebildet wird, indem die Keratinstrukturen (8) in einer Ballenform vorliegen, welche eine komplementär zur Innenform des Aufnahmeraums (10) ausgeführte Außenform aufweist.

4. Vorrichtung (1) nach Anspruch 3, **dadurch gekennzeichnet, dass** zur Bildung der Ballenform der Keratinstrukturen (8) ein Netz (16) mit einer Maschenweite verwendet wird, welche kleiner ist als eine vorbestimmte Mindestlänge für die Keratinstrukturen.

5. Vorrichtung (1) nach einem der Ansprüche 1 bis 4, **dadurch gekennzeichnet, dass** die Verdichtung der Keratinstrukturen (8) so groß ist, dass sie zumindest ein 12faches ihres Eigengewichtes an Öl (2) aus der Flüssigkeit (3) aufnehmen, bevor eine Sättigung der Keratinstrukturen (8) mit Öl (2) auftritt.

6. Vorrichtung (1) nach einem der Ansprüche 1 bis 5, **dadurch gekennzeichnet, dass** die Keratinstrukturen (8) von natürlichen Faserproteinen gebildet werden.

7. Vorrichtung (1) nach einem der Ansprüche 1 bis 6, **dadurch gekennzeichnet, dass** die Vorrichtung (1) mobil ist.

8. Vorrichtung (1) nach einem der Ansprüche 1 bis 7, **dadurch gekennzeichnet, dass** sie eingebunden ist in einen stationären Fließprozess zur Reinigung von Meer- und Süßwasser.

9. Verwendung einer Vorrichtung (1) nach einem der Ansprüche 1 bis 8 zur Herstellung brennbarer Energieträger bestehend aus ölgetränkten Keratinstrukturen (8).

## Claims

1. A device (1) for cleaning a fluid (3) contaminated with oil (2), comprising a container (4) having an inlet (5) for the contaminated fluid (3) and an outlet (6) for the cleaned fluid, wherein the container (4) contains a packing (7) of a material that can absorb the oil (2), through which material a contaminated fluid (3) can flow in the intentional use state of the device (1) to leave the contaminants behind, **characterized in that**
• said packing (7) is formed by a package-like tangle of keratin structures (8) that have a three-dimensionally irregular orientation and are randomly distributed in all three dimensions, which keratin structures are enclosed by a closed container edge (9) between the inlet and outlet (5, 6) and fit against it in a fluid-tight way in the use state of the device (1),
• wherein the tangle of the keratin structures (8) is essentially uniformly compacted along the path of the fluid (3) between the inlet and outlet (5, 6), wherein the compaction is such that the keratin structures (8) absorb at least 6.5 times their own weight of oil (2) from the fluid (3) before saturation of the keratin structures (8) with oil (2) occurs,
• wherein said packing (7) is formed by a separate absorption unit (11) that can be employed in a predetermined reception space (10) of the container (4)
• wherein a respective first absorption unit (11) present in the reception space (10) can be replaced from the reception space (10) of the container (4) by means of an exchange device (12) assigned to said container (4) automatically by a respective second absorption unit (11),
• wherein the replacement takes place as soon as the first absorption unit (11) exhibits a predetermined degree of oil saturation, wherein the degree of saturation of the absorption unit (11) can be determined automatically by means of an optical recognition device attached to the container (4) or to the outlet (6),
• wherein the recognition device is connected with a PLC (programmable logic controller), which addresses the exchange device (12) through a respective connection for the automated exchange of the absorption units (11), and optionally stops the continuous in-flow or out-flow of the fluid by addressing the respective valve in the inlet or outlet in the period of exchanging,
• wherein the respective first absorption unit (11) can be automatically supplied to a collection point (14) through a transport device (13) after the exchange has taken place.

2. The device (1) according to claim 1, **characterized in that** said exchange device (12) is formed by a revolver-like system with at least two drums (15) in which one absorption unit (11) each can be employed.

3. The device (1) according to claim 1 or 2, **characterized in that** said absorption unit (11) is formed by having the keratin structures (8) in a bale form, which has an outer shape with a design complementary to the inner shape of the reception space (10).

4. The device (1) according to claim 3, **characterized in that** a net (16) having a mesh size that is smaller than a predetermined minimum length for the keratin structures is used to form the bale form of the keratin structures (8).

5. The device (1) according to any of claims 1 to 4, **characterized in that** the compaction of the keratin structures (8) is such that they absorb at least 12 times their own weight of oil (2) from the fluid (3) before saturation of the keratin structures (8) with oil (2) occurs.

6. The device (1) according to any of claims 1 to 5, **characterized in that** the keratin structures (8) are formed from natural fibrous proteins.

7. The device (1) according to any of claims 1 to 6, **characterized in that** said device (1) is mobile.

8. The device (1) according to any of claims 1 to 7, **characterized in that** it is incorporated in a stationary flow process for cleaning sea water and fresh water.

9. Use of a device (1) according to any of claims 1 to 8 for preparing combustible energy carriers consisting of oil-soaked keratin structures (8).

## Revendications

1. Dispositif (1) pour purifier un liquide contaminé (3) avec de l'huile (2), comprenant un récipient (4) qui présente une arrivée (5) pour le liquide contaminé (3) et un écoulement (6) pour le liquide purifié, dans lequel un garnissage (7) d'un matériau absorbant l'huile (2) se trouve dans ledit récipient (4), qui peut être traversé du liquide contaminé (3) dans l'état d'utilisation conforme dudit dispositif (1) en laissant derrière la contamination, **caractérisé en ce que**
• ledit garnissage (7) est constitué d'un enchevêtrement en forme de paquet consistant en des structures kératiniques (8) disposées de manière tridimensionnelle aléatoire à répartition stochastique dans toutes les trois dimensions, qui sont renfermées, entre l'arrivée et l'écoulement (5, 6), d'un bord de récipient (9) fermé, et serrées contre celui-ci de façon étanche aux liquides dans l'état d'utilisation dudit dispositif (1),
• dans lequel ledit enchevêtrement des structures kératiniques (8) est comprimé de façon sensiblement uniforme le long du trajet du liquide (3) entre l'arrivée et l'écoulement (5, 6), la compression étant telle que lesdites structures kératiniques (8) absorbent au moins 6,5 fois leur poids propre d'huile (2) dudit liquide (3), avant qu'une saturation des structures kératiniques (8) avec l'huile (2) se produise,
• dans lequel ledit garnissage (7) est constitué d'une unité d'absorption (11) séparée qui peut être insérée dans un espace d'accommodation (10) prédéterminé du récipient (4),
• dans lequel une première unité d'absorption (11) respective, présente dans ledit espace d'accommodation (10), peut être remplacée automatiquement hors de l'espace d'accommodation (10) du récipient (4) par une deuxième unité d'absorption (11) respective au moyen d'un dispositif échangeur (12) attribué au récipient (4),
• dans lequel l'échange est effectué dès que la première unité d'absorption (11) présente un degré prédéterminé de saturation avec huile, dans lequel le degré de saturation de ladite unité d'absorption (11) peut être détecté automatiquement en utilisant un dispositif de détection optique monté au récipient (4) ou à l'écoulement (6),
• dans lequel ledit dispositif de détection est relié à un automate programmable industriel (API) qui commande ledit dispositif échangeur (12) à l'intermédiaire d'une connexion avec celui-ci pour l'échange automatique des unités d'absorption (11), et interrompt l'arrivée et l'écoulement continus dudit liquide (3) en commandant une vanne respective dans l'arrivée ou dans l'écoulement (5, 6) au cours de la période de l'échange,
• dans lequel la première unité d'absorption (11) respective peut être apportée automatiquement à un point de collecte (14) à l'intermédiaire d'un dispositif de transport (13) une fois l'échange terminée.

2. Dispositif (1) selon la revendication 1, **caractérisé en ce que** ledit dispositif échangeur (12) est constitué d'un système de type revolver avec au moins deux barillets (15), dans chacun desquels une unité d'absorption (11) peut être utilisée.

3. Dispositif (1) selon la revendication 1 ou 2, **caractérisé en ce que** ladite unité d'absorption (11) est constituée par la présence des structures kératiniques (8) en forme de ballot, qui présente une forme extérieure réalisée de façon complémentaire à la forme intérieure dudit espace d'accommodation (10).

4. Dispositif (1) selon la revendication 3, **caractérisé en ce qu'**un filet (16) avec un maillage inférieur à une longueur minimale prédéterminée pour les structures kératiniques est utilisé pour former la forme de ballot desdites structures kératiniques (8).

5. Dispositif (1) selon l'une quelconque des revendications 1 à 4, **caractérisé en ce que** la compression desdites structures kératiniques (8) est telle que celles-ci absorbent au moins 12 fois leur poids propre d'huile (2) dudit liquide (3), avant qu'une saturation des structures kératiniques (8) avec l'huile (2) se produise.

6. Dispositif (1) selon l'une quelconque des revendications 1 à 5, **caractérisé en ce que** lesdites structures kératiniques (8) sont constituées de protéines fibreuses naturelles.

7. Dispositif (1) selon l'une quelconque des revendications 1 à 6, **caractérisé en ce que** le dispositif (1) est mobile.

8. Dispositif (1) selon l'une quelconque des revendications 1 à 7, **caractérisé en ce qu'**il est intégré dans un processus de flux stationnaire pour purifier de l'eau de mer et de l'eau douce.

9. Utilisation d'un dispositif (1) selon l'une quelconque des revendications 1 à 8 pour fabriquer des sources énergétiques combustibles consistant en structures kératiniques (8) imbibées d'huile.
